# EUROPEAN PATENT SPECIFICATION

(11) **EP 4 073 373 B1**
(45) Date of publication and mention of the grant of the patent: **04.02.2026**
(21) Application number: 19828516.5
(22) Date of filing: 10.12.2019
(51) Int. Cl.: F02K 9/84, F02K 9/97, F02K 1/08

(54) **THRUSTER NOZZLE ASSEMBLY WITH FLOW REGULATOR IN THROAT AREA AND ROTARY JOINT**
SCHUBDÜSENANORDNUNG MIT DURCHFLUSSREGLER IM HALSBEREICH UND DREHVERBINDUNG
ENSEMBLE FORMANT TUYÈRE DE PROPULSEUR AVEC RÉGULATEUR DE DÉBIT DANS LA ZONE DE COL ET JOINT ROTATIF

(43) Date of publication of application: 19.10.2022
(73) Proprietor: Aerojet Rocketdyne, Inc., Melbourne, FL 32901 (US)
(72) Inventor: NOONAN, Kevin Mark, Sacramento, California 95813-6000 (US); COOPER, Robert, Sacramento, California 95813-6000 (US); WEST, Larry Kenneth, Sacramento, California 95813-6000 (US)
(74) Representative: Dehns
(86) International application number: PCT/US2019/065369
(87) International publication number: WO 2021/118530

(56) References cited:
- DE-A1- 2 320 076
- KR-B1- 101 960 397
- NO-A1- 20 181 590
- US-A- 3 142 153
- US-A- 3 727 843
- US-A1- 2020 080 517

## Description

### BACKGROUND

Thrusters, such as those for rocket engines, other aerospace vehicles, ground vehicles, marine vehicles, or other systems, are known to include convergent-divergent nozzles which expel a high-speed propulsive jet of fluid. Thrusters may also include regulator valves to deliver the pressurized fluid at a desired pressure.

KR 101,960,397 discloses a thrust control apparatus of a propulsion system.

US 3,727,843 discloses duct-forming assemblies and vector control.

### SUMMARY

A vehicle according to an exemplary aspect of the present invention is provided in accordance with claim 1.

In a further non-limiting embodiment of the foregoing vehicle , the actuator is further configured to selectively rotate the nozzle about a second axis normal to the longitudinal axis of the vehicle and the first axis.

In a further non-limiting embodiment of any of the foregoing vehicles, the assembly includes a plurality of nozzles and a corresponding plurality of flow regulators, and each of the plurality of nozzles is integral to the ball portion of the ball and socket joint.

In a further non-limiting embodiment of any of the foregoing vehicles, each of the plurality of flow regulators is configured to operate either independent of one another or in coordination with one another.

In a further non-limiting embodiment of any of the foregoing vehicles, the ball portion is a semi-spherical bearing and the socket portion a semi-spherical socket surrounding at least a portion of the ball portion.

In a further non-limiting embodiment of any of the foregoing vehicles, the pintle includes a includes a shank portion, a head portion having a greater diameter than the shank portion, and a tapered surface extending from the head portion, the tapered surface is configured to contact the seat, and a linear position of the tapered surface relative to the seat changes a size of a flow area through which fluid can flow through the throat section.

In a further non-limiting embodiment of any of the foregoing vehicles, the tapered surface gradually reduces in diameter from the head portion to a free end of the pintle.

In a further non-limiting embodiment of any of the foregoing vehicles, the pintle is one of a plurality of pintles arranged adjacent the throat section, and each of the plurality of pintles is independently moveable.

In a further non-limiting embodiment of any of the foregoing vehicles, the plurality of pintles consists of four pintles spaced-apart from one another about the longitudinal axis of the nozzle.

In a further non-limiting embodiment of any of the foregoing vehicles, the assembly includes a plurality of linear actuators each configured to selectively move a respective one of the plurality of pintles.

In a further non-limiting embodiment of any of the foregoing vehicles, the nozzle includes a divergent section extending from the throat section.

In a further non-limiting embodiment of any of the foregoing vehicles, the vehicle is a rocket engine.

A method according to an exemplary aspect of the present disclosure is provided in accordance with claim 13.

In a further non-limiting embodiment of the foregoing method, adjusting the position of the flow regulator includes linearly moving the pintle in a direction parallel to a longitudinal axis of the nozzle.

### BRIEF DESCRIPTION OF THE DRAWINGS

Figure 1 schematically illustrates an example rocket including an example nozzle assembly.
Figure 2 illustrates an example flow regulator.
Figure 3 illustrates an example rotary ball joint.
Figure 4 illustrates a second example nozzle assembly.

### DETAILED DESCRIPTION

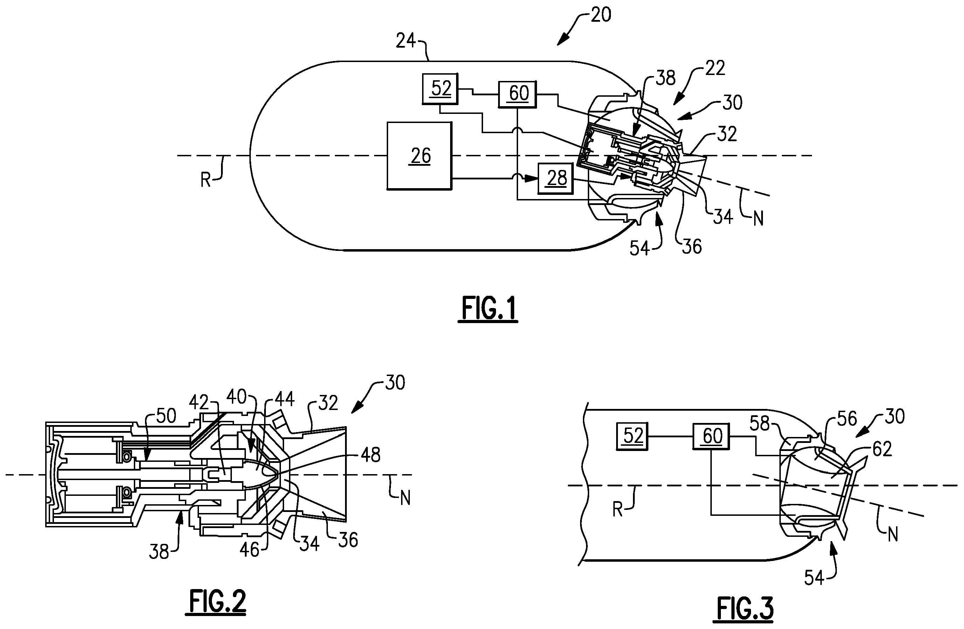

Figure 1 schematically illustrates a vehicle 20, which could be a rocket, missile, spacecraft, aircraft, or other vehicle. The vehicle 20 obtains thrust from a thruster 22, which in this example is a rocket engine. While a vehicle and rocket engine are shown in Figure 1 and discussed herein, this disclosure is not limited to rockets or rocket engines, and specifically applies to nozzle assemblies for other vehicles, including space, air, land and marine vehicles. This disclosure also applies to nozzle assemblies for thrusters in reaction control systems.

The vehicle 20 generally extends along a longitudinal vehicle axis R, and in this example includes a casing 24 extending along the longitudinal vehicle axis R. The casing 24 is an outer body of the vehicle 20. The casing 24 may be a one-piece or multi-piece structure.

At least one propellant 26 is stored within the casing 24. The propellant 26 may be a mono-propellant stored in a single tank or two separate propellants, namely fuel and an oxidizer, stored in separate tanks. The propellant 26 is fluidly coupled to a combustion chamber 28 arranged within the casing 24. The combustion chamber 28 is fluidly coupled to a nozzle assembly 30. While propellant and a combustion chamber are mentioned herein, this disclosure extends to thrusters without a combustion chamber, including cold gas thrusters and nuclear thermal rockets.

The nozzle assembly 30 is configured to expel a high-speed propulsive jet of the fluid to provide thrust for the vehicle 20. Specifically, in this example, the nozzle assembly 30 is configured to expel the products of the combustion chamber 28.

The nozzle assembly 30 includes a nozzle 32 including a narrow, throat section 34 and a divergent section 36 extending from the throat section 34 along a longitudinal nozzle axis N. The divergent section 36 gradually increases in diameter as the divergent section 36 extends away from the throat section 34 along the longitudinal nozzle axis N.

The nozzle assembly 30 includes a flow regulator 38, which is shown in detail in Figure 2. The flow regulator 38 is arranged adjacent the throat section 34 and is configured to regulate a flow of fluid (i.e., the products of the combustion chamber 28) through the throat section 34. In this example, the flow regulator 38 includes a pintle 40 having a shank portion 42 and a head portion 44 providing a tapered surface 46 gradually reducing in diameter toward a free end of the head portion 44. The tapered surface 46 which faces a seat 48 and is configured to contact the seat 48 in a closed position. Relative spacing between the tapered surface 46 relative to the seat 48 sets a size of a flow area through which fluid can flow through the throat section 34. The relative position of the tapered surface 46 and the seat 48 may be infinitely adjustable in one example. In this sense, the flow regulator 38 is moveable between a closed position and a number of open positions.

The tapered surface 46 is selectively moveable relative to the seat 48 in a direction parallel to the longitudinal nozzle axis N by a linear actuator 50. In this example, the tapered surface 46 is linearly moveable along the longitudinal nozzle axis N. The linear actuator 50 in this example is a ball screw actuator, but this disclosure extends to other types of actuators. The linear actuator 50 is mechanically connected to the shank portion 42, which is in turn mechanically connected to the head portion 44.

The linear actuator 50 is responsive to commands from a controller 52, in this example. The controller 52 is shown schematically in Figure 1. The controller 52 includes electronics, software, or both, to perform the functions described herein. Although it is shown as a single device, the controller 52 may include multiple controllers in the form of multiple hardware devices, or multiple software controllers within one or more hardware devices. The controller 52 may issue commands to various components of the vehicle 20 based on the output of one or more sensors, based on signals sent wirelessly to the vehicle 20, based on a preprogrammed flight plan, and/or based on other inputs.

In this disclosure, the nozzle 32 and flow regulator 38 are mounted to the casing 24 via a rotary ball joint 54, which is perhaps best seen in Figure 3. The rotary ball joint 54 is configured to selectively rotate the nozzle 32 and flow regulator 38 relative to the longitudinal vehicle axis R.

The rotary ball joint 54 includes a semi-spherical bearing (i.e., ball) 56 received in a semi-spherical socket (i.e., socket) 58 surrounding at least a portion of the bearing 56. In a particular example, the actuator(s) 60 are configured to move the bearing 56 in two planes, including by inclining the bearing 56 relative to the longitudinal vehicle axis R and rotating the bearing 56 about the longitudinal vehicle axis R. In this regard, the actuator(s) 60 are configured to move the bearing 56, and in turn the nozzle 32, about first and second axes, each of which is normal to the longitudinal vehicle axis R, and each of which is normal to one another. In an example, the first axis extends substantially in-and-out of the page relative to Figure 1, and the second axis extends in an up-and-down direction relative to Figure 1. The bearing 56 may be infinitely adjustable in these two planes relative to the socket 58, in one example. The socket 58 is sized and shaped to prevent translation of the bearing 56 relative to the socket 58 in any direction, including along the longitudinal vehicle axis R. Thus, in some examples, the rotary ball joint 54 is referred to as a trapped ball joint.

The bearing 56 is hollow and includes a central passageway 62 in this example. The nozzle 32 may be integrally formed with the bearing 56 in one example. Further, the flow regulator 38 is rigidly mounted in the central passageway 62 in this example. Thus, as the bearing 56 rotates within the socket 58, the longitudinal nozzle axis N will also rotate relative to the longitudinal vehicle axis R to provide thrust-vectoring as needed throughout a particular mission. The nozzle assembly 30, specifically the flow regulator 38 and the ball joint 54, can be controlled to provide pitch and yaw control of the vehcile 20 during the mission.

This disclosure provides adequate pitch and yaw control without requiring a large nozzle. Specifically, the length of the nozzle 32 is substantially reduced relative to existing nozzles. In one particular example, a length of the nozzle 32 is within 15-20% of the overall length of the vehicle 20. In a further example, the length of the nozzle 32 is less than 10% of the overall length of the vehicle 20. This, in turn, reduces the weight of the vehicle 20, and allows for designs in which the propellant storage tank(s) can be increased in size, providing for potentially longer missions.

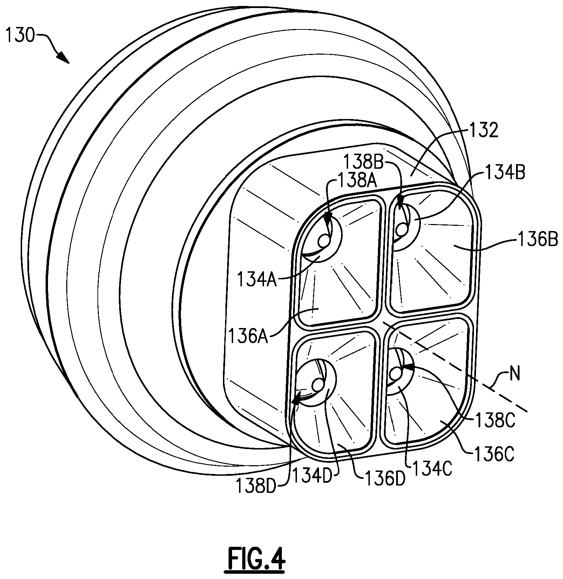

Another example nozzle assembly 130 is illustrated in Figure 4. To the extent not otherwise described or shown, the nozzle assembly 130 corresponds to the embodiment of Figures 1-3, with like parts having reference numerals preappended with a "1," unless specified otherwise below.

The nozzle assembly 130 includes a plurality of flow regulators 138A-138D which are arranged relative to respective throat sections 134A-134D. The products of a combustion chamber may be divided into four equal parts, with each part flowing to a respective flow regulator 138A-138D. The nozzle 132 includes four divergent sections 136A-136D gradually increasing in diameter extending away from a respective throat sections 134A-134D.

The flow regulators 138A-138D are each arranged substantially similar to the flow regulator 38, and in particular are configured to move between closed positions and a number of open positions. The flow regulators 138A-138D are independently moveable by respective linear actuators, each similar to the linear actuator 50, in response to commands from a controller. Alternatively, the flow regulators 138A-138D are controlled in coordination with one another such that the flow regulators 138A-138D make substantially the same movements at substantially the same time. To this end, the flow regulators 138A-138D could be moveable by a common linear actuator. The flow regulators 138A-138D are arranged along respective axes, which are parallel to the longitudinal nozzle axis N and are circumferentially spaced-apart from one another about the longitudinal nozzle axis N. The flow regulators 138A-138D may be controlled in a way that controls the roll of a rocket during flight, thus eliminating the need for a separate roll control system. Thus, the nozzle assembly 130 may be able to control pitch, yaw, and roll. Further, by splitting the nozzle 132 into four sections, the nozzle 132 can be even shorter than the nozzle 32 in some examples, leading to increased space for propellant, for example.

It should be understood that except where otherwise noted, terms such as "axial," "radial," and "circumferential" are used above with reference to the normal operational attitude of the vehicle 20. Further, these terms have been used herein for purposes of explanation, and should not be considered otherwise limiting. Terms such as "generally," "substantially," and "about" are not intended to be boundaryless terms, and should be interpreted consistent with the way one skilled in the art would interpret those terms.

Although the different examples have the specific components shown in the illustrations, embodiments of this disclosure are not limited to those particular combinations. In addition, the various figures accompanying this disclosure are not necessarily to scale, and some features may be exaggerated or minimized to show certain details of a particular component or arrangement.

One of ordinary skill in this art would understand that the above-described embodiments are exemplary and non-limiting. That is, modifications of this disclosure would come within the scope of the claims. Accordingly, the following claims should be studied to determine their true scope and content.

## Claims

1. A vehicle (20, 22), comprising:
a casing (24);
a socket portion (58) of a ball and socket joint (54); and
a nozzle assembly (30) comprising:
a nozzle (32) including a throat section (34), the nozzle (32) including a ball portion (56) of the ball and socket joint (54), wherein the nozzle (32) is mounted to the casing (24) via the ball portion (56) and the ball portion (56) is received at least partially in the socket portion (58);
a flow regulator (38) arranged adjacent the throat section (34) and configured to regulate a flow of fluid through the throat section (34), wherein the flow regulator (38) is attached to the nozzle (32) upstream of the throat section (34), the flow regulator (38) includes a pintle (40) moveable in a direction parallel to a longitudinal axis of the nozzle (32) relative to a seat (48) to regulate the flow of fluid through the throat area, and the flow regulator (38) is mounted to the casing (24) via the ball portion (56); and
an actuator (60) attached to the nozzle (32), wherein the actuator (60) is configured to selectively rotate the nozzle (32) via the ball and socket joint (54) about a first axis normal to a longitudinal axis (R) of the vehicle (20, 22).

2. The vehicle (20, 22) as recited in claim 1, wherein the actuator (60) is further configured to selectively rotate the nozzle (32) about a second axis normal to the longitudinal axis (R) of the vehicle (20, 22) and the first axis.

3. The vehicle (20, 22) as recited in claim 1 or 2, further comprising a plurality of nozzles (32) and a corresponding plurality of flow regulators (38), each of the plurality of nozzles integral to the ball portion (56) of the ball and socket joint (54).

4. The vehicle (20, 22) as recited in claim 3, wherein each of the plurality of flow regulators (38) is configured to operate either independent of one another or in coordination with one another.

5. The vehicle (20, 22) as recited in claim 3 or 4, wherein each of the corresponding plurality of pintles (40) of the plurality of flow regulators (38) is independently moveable.

6. The vehicle (20, 22) as recited in claim 5, further including a plurality of linear actuators (50) each configured to selectively move a respective one of the plurality of pintles (40).

7. The vehicle (20, 22) as recited in claim 5 or 6, wherein the plurality of flow regulators (38) consists of four flow regulators (38) spaced-apart from one another about the longitudinal axis of the nozzle (32).

8. The vehicle (20, 22) as recited in any preceding claim, wherein the ball portion (56) is a semi-spherical bearing and the socket portion (58) a semi-spherical socket surrounding at least a portion of the ball portion (56).

9. The vehicle (20, 22) as recited in any preceding claim, wherein:
the pintle (40) includes a shank portion (42), a head portion (44) having a greater diameter than the shank portion (42), and a tapered surface (46) extending from the head portion (44);
the tapered surface (46) is configured to contact the seat (48); and
a linear position of the tapered surface (46) relative to the seat (48) changes a size of a flow area through which fluid can flow through the throat section (34).

10. The vehicle (20, 22) of claim 9, wherein the tapered surface (46) gradually reduces in diameter from the head portion (44) to a free end of the pintle (40).

11. The vehicle (20, 22) as recited in any preceding claim, wherein the nozzle (32) includes a divergent section (36) extending from the throat section (34).

12. The vehicle (20, 22) as recited in any preceding claim, wherein the vehicle (20, 22) is a rocket engine (22).

13. A method of operating the vehicle (20, 22) as recited in any preceding claim, the method comprising:
thrust vectoring the casing (24) by adjusting a position of the nozzle (32) relative to the casing (24) via the ball and socket joint (54) and adjusting a position of the flow regulator (38).

14. The method as recited in claim 13, wherein adjusting the position of the flow regulator (38) includes linearly moving the pintle (40) in a direction parallel to a longitudinal axis of the nozzle (32).

## Patentansprüche

1. Fahrzeug (20, 22), umfassend:
ein Gehäuse (24);
einen Hülsenabschnitt (58) eines Kugelgelenks (54); und
eine Düsenanordnung (30), die Folgendes umfasst:
eine Düse (32) einschließend einen Halsabschnitt (34), wobei die Düse (32) einen Kugelabschnitt (56) des Kugelgelenks (54) einschließt, wobei die Düse (32) über den Kugelabschnitt (56) an dem Gehäuse (24) angebracht ist und der Kugelabschnitt (56) zumindest teilweise in dem Hülsenabschnitt (58) aufgenommen ist;
einen Durchflussregler (38), der angrenzend an den Halsabschnitt (34) angeordnet und so konfiguriert ist, dass er einen Fluiddurchfluss durch den Halsabschnitt (34) reguliert, wobei der Durchflussregler (38) an der Düse (32) stromaufwärts des Halsabschnitts (34) angebracht ist, wobei der Durchflussregler (38) einen Drehzapfen (40) einschließt, der in einer Richtung parallel zu einer Längsachse der Düse (32) relativ zu einem Sitz (48) beweglich ist, um den Fluiddurchfluss durch den Halsbereich zu regulieren, und der Durchflussregler (38) an dem Gehäuse (24) über den Kugelabschnitt (56) angebracht ist; und
einen Aktuator (60), der an der Düse (32) angebracht ist, wobei der Aktuator (60) so konfiguriert ist, dass er die Düse (32) über das Kugelgelenk (54) selektiv um eine erste Achse normal zu einer Längsachse (R) des Fahrzeugs (20, 22) dreht.

2. Fahrzeug (20, 22) nach Anspruch 1, wobei der Aktuator (60) weiter so konfiguriert ist, dass er die Düse (32) selektiv um eine zweite Achse senkrecht zur Längsachse (R) des Fahrzeugs (20, 22) und der ersten Achse dreht.

3. Fahrzeug (20, 22) nach Anspruch 1 oder 2, weiter umfassend eine Vielzahl von Düsen (32) und eine entsprechende Vielzahl von Durchflussreglern (38), wobei jede der Vielzahl von Düsen einstückig mit dem Kugelabschnitt (56) des Kugelgelenks (54) ist.

4. Fahrzeug (20, 22) nach Anspruch 3, wobei jeder der Vielzahl von Durchflussreglern (38) so konfiguriert ist, dass er entweder unabhängig voneinander oder in Koordination miteinander arbeitet.

5. Fahrzeug (20, 22) nach Anspruch 3 oder 4, wobei jeder der entsprechenden Vielzahl von Zapfen (40) der Vielzahl von Durchflussreglern (38) unabhängig beweglich ist.

6. Fahrzeug (20, 22) nach Anspruch 5, weiter einschließend eine Vielzahl von linearen Aktuatoren (50), die jeweils so konfiguriert sind, dass sie selektiv einen entsprechenden aus der Vielzahl von Zapfen (40) bewegen.

7. Fahrzeug (20, 22) nach Anspruch 5 oder 6, wobei die Vielzahl von Durchflussreglern (38) aus vier Durchflussreglern (38) besteht, die um die Längsachse der Düse (32) voneinander beabstandet sind.

8. Fahrzeug (20, 22) nach einem der vorstehenden Ansprüche, wobei der Kugelabschnitt (56) ein halbkugelförmiges Lager und der Hülsenabschnitt (58) eine halbkugelförmige Hülse ist, die zumindest einen Teil des Kugelabschnitts (56) umgibt.

9. Fahrzeug (20, 22) nach einem der vorstehenden Ansprüche, wobei:
der Zapfen (40) einen Schaftabschnitt (42), einen Kopfabschnitt (44), der einen größeren Durchmesser als der Schaftabschnitt (42) aufweist, und eine verjüngte Oberfläche (46), die sich von dem Kopfabschnitt (44) aus erstreckt, einschließt;
die verjüngte Oberfläche (46) so ausgebildet ist, dass sie den Sitz (48) berührt;
und
eine lineare Position der verjüngten Oberfläche (46) relativ zum Sitz (48) eine Größe eines Durchflussbereichs verändert, durch den Fluid durch den Halsabschnitt (34) fließen kann.

10. Fahrzeug (20, 22) nach Anspruch 9, wobei sich die verjüngte Fläche (46) vom Kopfabschnitt (44) bis zu einem freien Ende des Zapfens (40) allmählich im Durchmesser verringert.

11. Fahrzeug (20, 22) nach einem der vorstehenden Ansprüche, wobei die Düse (32) einen divergenten Abschnitt (36) einschließt, der sich von dem Halsabschnitt (34) aus erstreckt.

12. Fahrzeug (20, 22) nach einem der vorstehenden Ansprüche, wobei das Fahrzeug (20, 22) ein Raketentriebwerk (22) ist.

13. Verfahren zum Betreiben des Fahrzeugs (20, 22) nach einem der vorstehenden Ansprüche, wobei das Verfahren Folgendes umfasst:
Schubvektorisierung des Gehäuses (24) durch Einstellen einer Position der Düse (32) relativ zum Gehäuse (24) über das Kugelgelenk (54) und Einstellen einer Position des Durchflussreglers (38).

14. Verfahren nach Anspruch 13, wobei das Einstellen der Position des Durchflussreglers (38) das lineare Bewegen des Zapfens (40) in einer Richtung parallel zu einer Längsachse der Düse (32) einschließt.

## Revendications

1. Véhicule (20, 22), comprenant :
un carter (24) ;
une partie douille (58) d'un joint (54) à bille et à douille ; et
un ensemble (30) buse comprenant :
une buse (32) incluant une section d'étranglement (34), la buse (32) incluant une partie bille (56) du joint (54) à bille et à douille, dans lequel la buse (32) est montée sur le carter (24) par l'intermédiaire de la partie bille (56) et la partie bille (56) est reçue au moins partiellement dans la partie douille (58) ;
un régulateur de débit (38) agencé à proximité de la section d'étranglement (34) et configuré pour réguler un débit d'un fluide à travers la section d'étranglement (34), dans lequel le régulateur de débit (38) est fixé à la buse (32) en amont de la section d'étranglement (34), le régulateur de débit (38) inclut un pivot (40) mobile dans une direction parallèle à un axe longitudinal de la buse (32) par rapport à un siège (48) pour réguler le débit de fluide à travers la zone d'étranglement, et le régulateur de débit (38) est monté sur le carter (24) via la partie bille (56) ; et
un actionneur (60) fixé à la buse (32), dans lequel l'actionneur (60) est configuré pour faire tourner sélectivement la buse (32) via le joint (54) à bille et à douille autour d'un premier axe perpendiculaire à un axe longitudinal (R) du véhicule (20, 22).

2. Véhicule (20, 22) selon la revendication 1, dans lequel l'actionneur (60) est en outre configuré pour faire tourner sélectivement la buse (32) autour d'un second axe perpendiculaire à l'axe longitudinal (R) du véhicule (20, 22) et au premier axe.

3. Véhicule (20, 22) selon la revendication 1 ou la revendication 2, comprenant en outre une pluralité de buses (32) et une pluralité correspondante de régulateurs de débit (38), chacune de la pluralité de buses étant intégrée à la partie bille (56) du joint (54) à bille et à douille.

4. Véhicule (20, 22) selon la revendication 3, dans lequel chacun de la pluralité de régulateurs de débit (38) est configuré pour fonctionner indépendamment des autres ou en coordination avec les autres.

5. Véhicule (20, 22) selon la revendication 3 ou la revendication 4, dans lequel chacun de la pluralité correspondante de pivots (40) de la pluralité de régulateurs de débit (38) est mobile indépendamment.

6. Véhicule (20, 22) selon la revendication 5, incluant en outre une pluralité d'actionneurs linéaires (50) configurés chacun pour déplacer sélectivement un pivot respectif parmi la pluralité de pivots (40).

7. Véhicule (20, 22) selon la revendication 5 ou la revendication 6, dans lequel la pluralité de régulateurs de débit (38) consiste en quatre régulateurs de débit (38) espacés les uns des autres autour de l'axe longitudinal de la buse (32).

8. Véhicule (20, 22) selon une quelconque revendication précédente, dans lequel la partie bille (56) est un roulement semi-sphérique et la partie douille (58) est une douille semi-sphérique entourant au moins une partie de la partie bille (56).

9. Véhicule (20, 22) selon une quelconque revendication précédente, dans lequel :
le pivot (40) inclut une partie tige (42), une partie tête (44) présentant un diamètre supérieur à la partie tige (42), et une surface conique (46) s'étendant à partir de la partie tête (44) ;
la surface conique (46) est configurée pour entrer en contact avec le siège (48) ; et
une position linéaire de la surface conique (46) par rapport au siège (48) modifie une taille d'une zone d'écoulement à travers laquelle le fluide peut s'écouler à travers la section d'étranglement (34).

10. Véhicule (20, 22) selon la revendication 9, dans lequel la surface conique (46) diminue progressivement de diamètre depuis la partie tête (44) jusqu'à une extrémité libre du pivot (40).

11. Véhicule (20, 22) selon une quelconque revendication précédente, dans lequel la buse (32) inclut une section divergente (36) s'étendant à partir de la section d'étranglement (34).

12. Véhicule (20, 22) selon une quelconque revendication précédente, dans lequel le véhicule (20, 22) est un moteur de fusée (22).

13. Procédé de fonctionnement du véhicule (20, 22) selon une quelconque revendication précédente, le procédé comprenant :
la poussée vectorielle du carter (24) en ajustant la position de la buse (32) par rapport au carter (24) via le joint (54) à bille et à douille et en ajustant une position du régulateur de débit (38).

14. Procédé selon la revendication 13, dans lequel l'ajustement de la position du régulateur de débit (38) inclut un déplacement linéaire du pivot (40) dans une direction parallèle à un axe longitudinal de la buse (32).
